# EUROPEAN PATENT SPECIFICATION

(11) **EP 0 377 111 B1**
(45) Date of publication and mention of the grant of the patent: **02.03.1994**
(21) Application number: 89121857.0
(22) Date of filing: 27.11.1989
(51) Int. Cl.: A47J 19/02

(54) **Centrifugal machine with central feed of the kind utilizable particularly on the alimentary field for obtaining fruit or vegetables juices**
Zentrifuge mit zentralem Einfüllkanal, insbesondere zur Saftgewinnung aus Früchten und Gemüsen
Centrifugeuse à alimentation centrale, en particulier pour aliments, pour l'extraction de jus de fruits et de légumes

(30) Priority: 05.12.1988 IT 4577088
(43) Date of publication of application: 11.07.1990
(73) Proprietor: Cimenti, Antonio, I-30027 San Dona' di Piave (Venezia) (IT)
(72) Inventor: Cimenti, Antonio, I-30027 San Dona' di Piave (Venezia) (IT)
(74) Representative: Da Riva, Ermanno

(56) References cited:
- CH-A- 375 114
- CH-A- 377 495
- DE-B- 1 080 276
- FR-A- 786 839
- GB-A- 192 291

## Description

The present invention relates to a centrifugal machine with central feed of the kind utilizable particularly on the alimentary field for obtaining fruit or vegetables juices, which is described in the claim 1.

From CH-A-377495 is known a centrifugal machine of the kind defined in the preamble of Claim 1. In particular, it comprises a housing provided with a lower part having a bottom disc connected to a rotating filtering basket supported by a vertical shaft of an electric motor, and an upper part spaced from the lower part for containing said filtering basket and formed integrally with a vertically projected tubular conduit, in which the fruits and vegetables to be crumbled for obtaining juices are introduced and pressed into the filtering basket, by means of a pestle slidably introduced into said tubular conduit, wherein the space defined by the housing lower and upper parts is communicating with an outlet for disharging the fruit and vegetables residuals and an outlet for disharging the juices.

The bottom disc is rotatably connected to an indented disc, whose cutting teeth when rotating engage the fruits and vegetables being pressed into the rotating filtering basket by the pestle, by crumbling them in cooperation with the teeth of an indented ring firmly connected to the bottom side of the tubular conduit, facing the indented disc, wherein the indented disc is provided with a projected head screwed on the mmotor shaft and having sharpened cutting edges for crumbling also the fruits and vegetables.

Finally, a blade with sharpened cutting edges is also provided in the housing upper part and is positioned slightly spaced above the teeth of the indented disc, for preventing the fruits and vegetables being crumbled and pressed by the pestle from being entrained in rotation by the rotation of the teeth of the indented disc.

DE-B-1080276 disclosed a centrifuge similar to that disclosed by CH-A-377495, which differs therefrom in that the filtering basket is shaped in a different way and is provided only with one outlet for discharging the juices, while the fruit and vegetables residuals are disharged separately and the pestle for pressing the fruits and vegetables to be crumbled is unprovided.

From FR-A-786839 is known a cheese grater, which can be utilized also for crumbling fruits and vegetables for obtaining juices, comprising a cylindric hopper in the lower part of which a grater indented conic member is disposed, which is driven in rotation by an electric motor, and in the upper part of which a vertical shaft provided with a pressing conic member may slide vertically, in order to introduce the cheese, fuits, vegetables etc, to be crumbled into the hopper from the upper part thereof, and to crumble them by means of such indented conic member driven in rotation by the electric motor, wherein the cheese, fruits vegetable etc. introduced into the hopper are pressed against the indented conic member by means of the pressing conic member being lowered toward said indented conic member. .

A container is disposed below the indented conic member for collecting the grated cheese or the fruit or vegetables juices, and a vertical guide member is provided within the hopper, both for guiding the vertical movement of the pressing conic member and for preventing the cheese, fruits, vegetables etc. from being entraimed in rotation by the rotary movement of the indented conic member.

The present invention concerns a centrifugal machine for obtaining fruit or vegetables juices, of the kind disclosed in CH-A-377495, which is however shaped in a different way for obtaining an effective and complete crumbling of the material being processed therein.

In order to better understand the characteristics and advantages attainable with the present invention, the entire assembly will be hereinafter described more in detail, in a preferred embodiment thereof by way of a not-limitative example, with reference to the accompanying drawings in which:
- fig. 1 shows a cut view taken along a diametrically transversal plane, of part of the head of a centrifuge with central feed according to the present invention;
- fig. 2 shows a cut view taken along a transversal plane diametrically orthogonal to that of fig. 1;
- fig. 3 shows, as in fig. 1, a possible different embodiment thereof;
- fig. 4 illustrates a possible shaping of the element for fixing the rotating unit of grater and filtering basket, by means of the three orthogonal projections thereof;
- fig. 5 and 6 illustrate, as the fig. 3, two other possible shapings of the same element of fig. 4.

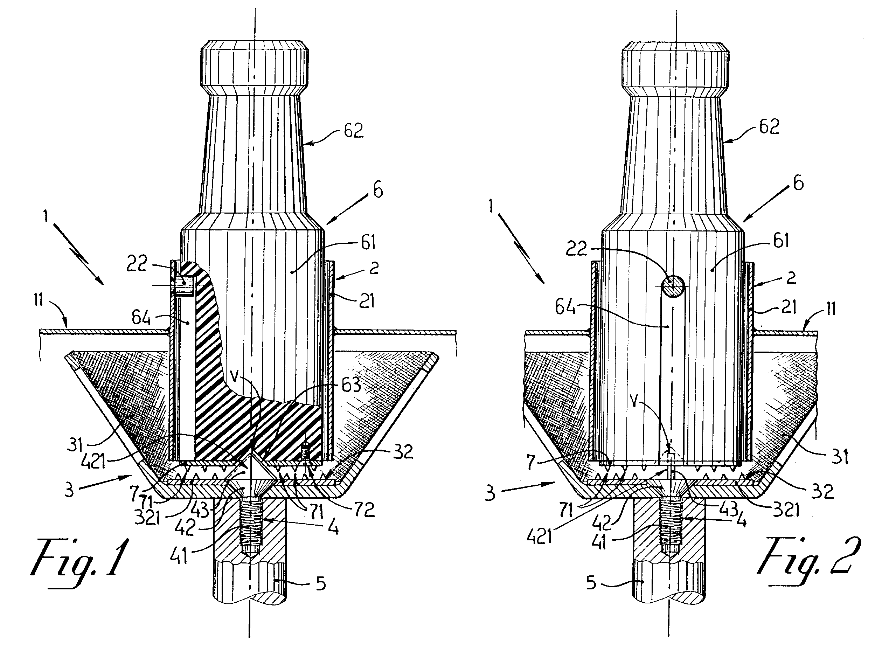

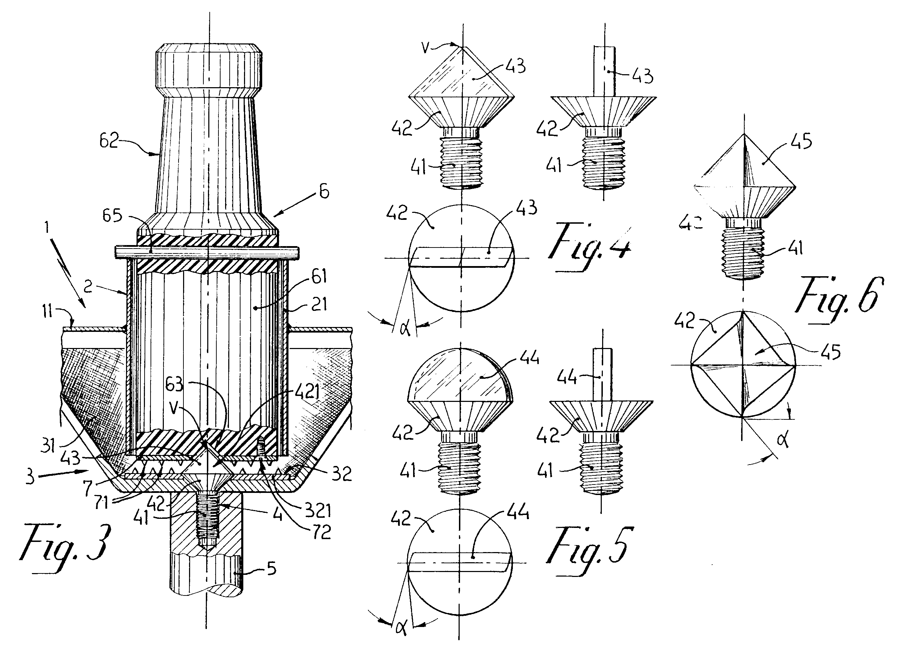

With particular reference to fig. 1 and 2, it is noted a part of the head 1 of a centrifuge of the kind referred to, in which it is to point out the feeding duct 2 formed by a cylindrical tubular portion 21 connected to the structure 11 of the same head 1, the rotating working unit 3 formed by the filtering basket 31 and the grater 32 constituted by an upper indented disc 321, the fixing element 4 for fixing said rotating working unit 3 to the upper end of the motor shaft 5, the pestle 6 constituted by a cylindrical body 61 having a suitable lenght slidably insertable in said feeding duct 2 and by an upper handgrip 62 constituted by a sole adequately shaped part.

The fixing element 4, which is always constituted by a screw 41 and is so shaped as its head 42 is provided with a projected part 421 that in such figures 1 and 2 is constituted by a triangular plate 43 disposed diametrically to the same head 42 and which extends therefrom, being provided with its upper apex V coaxial to the same screw 41.

Moreover, as it is clearly pointed out by the subsequent figure 4, the sides of such rectangular plate 43 are adequately beveled thus providing a rake α adapted to make sharp the working corners..

At the end introduced in the feeding duct 2, the pestle 6 is provided with an indented discoidal plate 7 fixed by means of screws 72 thereto, from the outer surface of which a plurality of small projecting elements 71 adequately sharpened extends.

Furthermore, at the centre of said discoidal plate 7 a hole is provided and penetrates in the corresponding end of the cylinder 61 of the pestle 6, forming a conic cavity 63 adapted to permit, as described hereinafter, the penetration of the projected part 421 provided on said head 42 of the fixing screw 41 therein.

In addition, a longitudinal groove 64 is provided on the cylindric body 61 of said pestle 6, in which groove is engaged a pin 22 connected to the feeding duct 2 near its upper end and projecting toward inside thereof,

Said groove 64 extends for such a portion that, when the pestle 6 is introduced in the feeding duct 2, said pin 22 abuts on the terminal portion of the groove 64 by stopping the pestle 6 in such a way that its introduced end, provided with said indented discoidal plate 7, is adequately and slightly spaced from the indented disc 321 forming said grater 32.

The operation of the assembly is the following.

The centrifuge is put in operation, so that the working unit 3 of grater and filtering basket is rotated being driven by the associated motor to the shaft 5 of which it is connected.

Then, in the feeding duct 2 is introduced the material to be processed and afterwards the pestle 6 for pushing, said material to be processed against the grater 32.

The introduction of the pestle 6 occurs in such a manner that the pin 22 penetrates in the groove 64.

When arrives in contact with the grater 32, the introduced material is crumbled by the teeth thereof which at the same time, however, cause the entrainment in rotation thereof.

When the pestle 6 is introduced, its pressing surface provided with said indented discoidal plate 7 bears against the material being processed, so that the teeth 71 of such discoidal plate 7 engage the mass of material and prevent the same from being rotated by the entrainment caused, as specified above, by the rotation of the grater 32 since the pestle 6 is clearly prevented from rotating by the pin 22 engaging the groove 64 thereof.

The arrangement of the above described triangular plate 43 on the head 42 of the fixing screw 4 makes it possible that also at the central zone of the grater 32 the material undergoes an effective and complete crumbling.

In fact, while impacting the material being processed the cutting corners of the sides of said triangular plate 43 progressively and completely cut thereof up to its centre,.

When the pestle 6 arrives with its lower pushing surface near the grater 32, the pin 22 bears against the upper end of the groove 64 thus being stopped so that to prevent any further advancing thereof and therefore its impact against the grater 32.

In such position, such triangular plate 43 would impact against the lower pushing surface of the pestle 6, so that, as already stated, a conic cavity 63 is provided on such part, which cavity, always in this position, is slightly spaced from the outline of the triangular plate 43 thus avoiding any contact therewith.

It is to point that the projected part 421 provided on the head 42 of the fixing screw 4 which, as described previously by way of example, is of triangular shape, may assume other different equivalent shapings, for instance it may be constituted by a half-discoidal plate 44 as illustrated by fig. 5 or by a pyramidal element 45 as illustrated by fig. 6.

As clearly pointed out from fig. 5 and 6, also with these different shapings the corners impacting the material to be processed are made cutting by adequately shaping their sides so as to generate always a suitable rake α.

Also the above described system for slidably guiding of the pestle 6, adapted to prevent it from being entrained in rotation as well as the system for stopping it at its end of introduction may be obtained in other equivalent manners.

It is to point out additionally that, from tests effected in practice, the material entrained in rotation by the rotating grater 32 causes a very limited entrainment in rotation of the pestle 6, so that it was enough to have a very limited counteraction for preventing the same from being rotated.

In practice, the simple grasp exerted by the operator's fingers for progressively putting it in the feeding duct 2 is enough for preventing without effort any limited rotation thereof.

Therefore, it follows that in practice it is enough to provide a simple means for stopping its introduction stroke into said feeding duct for stopping said pestle, when its introduced end arrives near said rotating grater 32.

Therefore, a possible embodiment thereof may be that illustrated by fig. 3, wherein said pestle 6 is simply provided with a cylindric rod 65 near the upper end of its cylindric body 61, which rod is inserted diametrically thereto, transversally to said cylindric body 61 as well as irremovably connected thereto, the ends of such rod being projected from the cylindric body 61, in such a way that when bearing against the upper edge of said feeding duct 2, the rod 65 delimitates the penetration of the pestle 6 in the same feeding duct, while stopping it when the introduced end thereof arrives near the grater 32.

## Claims

1. Centrifugal machine with central feed, of the kind particularly utilizable in the alimentary field for obtaining fruit or vegetables juices, wherein the head of the screw (41) employed for fixing the rotating unit of grater (32) and filtering basket (31) to the motor shaft (5) of the centrifuge is so shaped as to present a central projected part (421) with respect to the working surface of the grater (32), the side surface of said projected part (421) being also provided with cutting parts, said pestle (6), and said feeding duct (2) being provided with anti-rotation and stopping means (22,64;65) reciprocally co-operating for slidably guiding said pestle (6) in the associated feeding duct (2), while preventing at the same time the entrainment in rotation thereof, due to the rotation of the material being processed which in turn is entrained in rotation by the rotating grater (32), as well as for stopping said pestle (6) when the introduced end thereof arrives, at the end of introduction, near said grater (32), characterized in that the surface of the introduced end of the pestle (6) is provided with a plurality of small projecting elements (71), preferably sharpened, adapted to engage the body of the parts of material to be processed.

2. Centrifugal machine according to claim 1, characterized in that said anti-rotation and stopping means are provided with a pin (22) connected to the feeding duct (2) near its upper end and projected toward inside thereof, and with a longitudinal groove (64) on the cylindric body (61) of said pestle (6), said pin (22) engaging said groove (64) in such a way to stop the pestle (6), by bearing against the upper end of said groove (64), so that to prevent the impact of said pestle (6) against said grater (32).

## Patentansprüche

1. Zentrifuge mit zentralem Einfüll anal insbesondere zur Saftgewinnung aus Früchten und Gemüse, in der der Schraubekopf(41) der zur Befestigung der Drehgruppe der Reibe (32) und des Filtrierkorbes (31) an die Antriebswelle (5) der Zentrifuge verwendet ist, ist so gestaltet dass er einen hervorstehenden Mittelseite (421) hinsichtlich der Arbeitsfläche der Reibe (32) vorzeigt, weil die Seitenfläche des besagten hervorstehenden Teils (421) ist ausserdem mit schneidenden Teilen versehen, besagter Stössel (6) und besagter Einfüllkanal (2) sind mit Antirotations- und Bremsmitteln (22,64;65) versehen die miteinander zusammenarbeiten um gleitend diesen Stössel (6) in den verbindeten Eifüllkanal (2) zu leiten und verhindert gleichzeitig das Mitnehmen ins Rotation von der Rotation des Materials in Bearbeitung das seinerseits von der Drehreibe (32) ins Rotation gebracht ist, und ausserdem um besagter Stössel (6) zu halten wenn er sein eingeführtes Ende erreicht, am Ende der Einführung, in der Nähe der besagten Reibe (32), dadurch gekennzeichnet dass die Fläche des eingeführten Endes des Stössels (6) mit einer Mehrheit von kleinen hervorstehenden Teilen (71), vorzugsweise zugespitzt, ausgestattet ist, geeignet um das Mittelstück des Materials in Bearbeitung zu beschäftigen.

2. Zentrifuge nach Anspruch 1, dadurch gekennzeichnet dass besagten Antirotations- und Bremsmittel mit einem Stift (22) versehen sind, am Einfüllkanal (2) in der Nähe seines oberen Endes verbindet und nach das Innere des Kanals hervorstehend, und mit einer Längsrille (64) am zylindrischen Körper (61) des besagten Stössels (6), der besagter Stift (22) beschäftigt die besagte Rille (64) in so einer Weise dass der Stössel (6) haltet, und schlägt gegen das oberen Ende der besagten Rille (64) und verhindert den Aufschlag des Stössels (6) gegen die besagte Reibe.

## Revendications

1. Centrifugeuse à alimentation centrale du type employable particulièrement dans le champ alimentaire pour obtenir jus de fruits ou de legumes, dans laquelle la tête de la vis (41) employée pour fixer le group tournant de la râpe (32) et de la corbeille filtrante (31) à l'arbre moteur (5) de la centrifugeuse est conformée en manière de présenter une partie centrale saillante (421) par rapport à la surface de travail de la râpe (32), la surface laterale de dite partie saillante (421) étant en outre pourvue de côtés coupants, ledit pilon (6) et ledit conduit d'alimentation (2) étant pourvus de moyens anti-rotational et d'arrêt (22,64;65) coopérant réciproquement pour guider coulamment dit pilon (6) dans le conduit d'alimentation associé (2) en lui empêchant au même temps la traînée en rotation induite par la rotation du matériel en travail traîné à son tour en rotation par la râpe tournante (32) et pour arrêter dit pilon (6) aussi quand son bout introduit arrive, à la fin de l'introduction, en proximité de dite râpe (32), caracterisée par le fait que la surface du bout introduit du pilon (6) est pourvue d'une pluralité de petits éléments saillant (71), préférablement pointus, aptes à engager le corps des morceaux de matériel à traiter.

2. Centrifugeuse selon la revendication 1, caracterisée par le fait que les moyens d'anti-rotation et d'arrêt cités sont pourvus d'un pivot (22) accouplé au conduit d'alimentation (2) en proximité de son extremité supérieure et saillant vers l'interieur du même, et d'une cannelure longitudinale (64) sur le corps cylindrique (61) dudit pilon (6), nommé pilon (22) engage dite cannelure (64) de façon que le pilon s'arrête (6), en allant en battement contre l'eytremité supérieure de dite cannelure (64), et d'empêcher le choc du pilon (6) contre dite râpe.
